# EUROPÄISCHE PATENTANMELDUNG

(11) **EP 1 026 007 A2**
(43) Veröffentlichungstag der Anmeldung: **09.08.2000**
(21) Anmeldenummer: 00101858.9
(22) Anmeldetag: 31.01.2000
(51) Int. Cl.: B44C 5/04, B32B 27/04, E04F 13/00, E04F 15/00

(54) **Widerstandsfähiges Dekor**

(30) Priorität: 01.02.1999 DE 19903914
(71) Anmelder: Bausch Aktiengesellschaft, D-86647 Buttenwiesen (DE)
(72) Erfinder: Schunck, Stephan, Dr., 86161 Augsburg (DE)
(74) Vertreter: Pfenning, Meinig & Partner

(57) **Zusammenfassung**

Die vorliegende Erfindung bezieht sich auf ein widerstandsfähiges Overlay (1), ein Verfahren zu seiner Herstellung, ein Verfahren zur Herstellung eines mehrschichtigen Belagelementes sowie auf Verwendung derartiger Belagelemente. Derartige Overlays (1) und Belagelemente sowie Verfahren werden beispielsweise für abriebfeste dekorative Schichtstoffe, insbesondere für Fußbodenelemente oder Laminate im Bereich der Möbelherstellung verwendet.

Das erfindungsgemäße Overlay (1) zeichnet sich dadurch aus, daß es eine Trägerschicht (7) mit einer als Sicht-seite dienenden Oberseite und einer im applizierten Zustand dem Belagelement zugewandten Unterseite aufweist, wobei die Oberseite der Trägerschicht mit einem abriebfesten Material versehen ist und die Unterseite der Trägerschicht im Konterdruck mit muster- und farbgebenden Schichten (2, 3, 4) bedruckt ist.

## Beschreibung

Die vorliegende Erfindung bezieht sich auf ein widerstandsfähiges Overlay, ein Verfahren zu seiner Herstellung, ein Verfahren zur Herstellung eines mehrschichtigen Belagelementes nach den Oberbegriffen der Ansprüche 1, 11 bzw. 22 sowie auf die Verwendung derartiger Belagelemente nach dem Oberbegriff des Anspruchs 25. Derartige Overlays werden beispielsweise für abriebfeste dekorative Schichtstoffe benötigt, wie sie beispielsweise für Laminatfußbodenelemente oder Laminate im Bereich der Möbelherstellung verwendet werden.

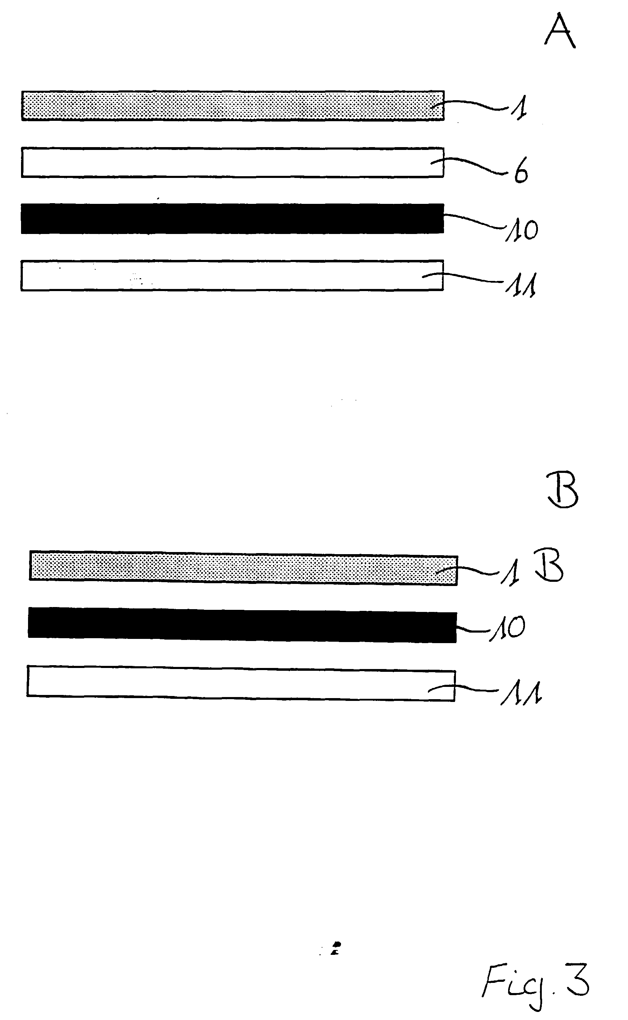

Nach dem Stand der Technik werden derartige dekorative abriebfeste Schichtstoffe aus einem mehrschichtigen Verbund hergestellt, wobei der Verbund mindestens vier Schichten aufweist. Figur 3A zeigt den typischen Aufbau einer herkömmlichen Laminat-Fußbodenplatte. Danach ist auf einer Trägerplatte 10 ein mit einem Dekor bedrucktes Papier 6 auflaminiert, das auf der Sichtseite den typischen optischen Eindruck der späteren Fußbodenplatte erzeugt. Dieses Dekorpapier ist durch eine weitere Schicht aus einem Overlaypapier geschützt, wobei das Overlaypapier 1 auf seiner Oberseite beispielsweise mit Korund abriebfest beschichtet ist. Dekorpapier 6 und Overlay 1 sind beispielsweise mit Melamin imprägniert. Auf der Rückseite der Trägerplatte 10 ist eine Gegenzugschicht 11 angeordnet, die verhindert, daß sich die Trägerplatte aufgrund einer einseitigen Beschichtung mit Dekorpapier 6 und Overlay 1 aufgrund deren Zugspannung durchbiegt. Der Gegenzug muß daher genau so dimensioniert sein, daß er die Zugspannung von Dekorpapier 6 und Overlaypapier 1 ausgleicht.

Als Trägerplatten 10 kommen üblicherweise mitteldichte Faserplatten oder Preßspanplatten zum Einsatz. Dekorpapiere 6 sind in der Regel Spezialpapiere mit einem Gewicht von 50 bis 100 g/m², die mit Holz- oder Phantasiedekoren bedruckt sind und die mit Melamin- oder Harnstoffharzen oder einem Gemisch aus diesen in wenigstens einem Schritt imprägniert werden. Die Harzauflage beträgt dabei üblicherweise 80 bis 120 % bezogen auf das Papiergewicht. Bei dem Overlay handelt es sich im allgemeinen um ein sogenanntes Overlaypapier, das ein Flächengewicht zwischen 20 und 50 g/m² aufweist. Dieses Overlaypapier wird beim Verpressen mit dem Dekorpapier und der Trägerplatte vollständig durchsichtig, so daß das Dekor des Dekorpapiers 6 sichtbar wird.

Der Gegenzug 11 ist ein preiswertes, ebenfalls imprägniertes Papier, das als Balance dient, damit der gesamte Aufbau aufgrund der Vernetzung der eingesetzten Kondensationsharze in Dekorpapier und Overlay nicht in eine Richtung schüsselt.

Die einzelnen Papiere, die zum Aufbau eines Laminatbelagelementes eingesetzt werden, werden von verschiedenen Herstellern hergestellt und erst beim Hersteller des Laminates zusammengefügt. Damit ergibt sich bei der Herstellung des Laminates ein sehr großer Fertigungsaufwand, da im allgemeinen vier verschiedene Schichten miteinander verpreßt werden müssen. Weiterhin muß der Gegenzug geeignet dimensioniert werden, damit er die Zugspannungen, die von Dekorpapier und Overlay verursacht werden, ausgleicht.

Aufgabe der vorliegenden Erfindung ist es daher, ein Overlay sowie ein Verfahren zur Herstellung von Overlays und Belagelementen sowie deren Verwendung anzugeben, durch die die Herstellung von Belagelementen vereinfacht und kostengünstiger durchgeführt werden kann.

Diese Aufgabe wird durch das Overlay nach dem Oberbegriff des Anspruchs 1, das Verfahren zur Herstellung eines Overlays nach dem Oberbegriff des Anspruchs 11, das Verfahren zur Herstellung eines mehrschichtigen Belagelementes nach dem Oberbegriff des Anspruchs 22 in Verbindung mit ihren jeweiligen kennzeichnenden Merkmalen sowie die Verwendung derartiger Belagelemente nach dem Anspruch 25 gelöst.

Vorteilhafte Weiterbildungen des erfindungsgemäßen Overlays und der erfindungsgemäßen Verfahren werden in den abhängigen Ansprüchen gegeben.

Das erfindungsgemäße Overlay besitzt eine Trägerschicht, beispielsweise aus Overlaypapier, mit einer als Sichtseite fungierenden Oberseite und einer im applizierten Zustand dem Belagelement zugewandten Unterseite, wobei die Trägerschicht imprägniert ist und auf ihrer Oberseite eine Schicht mit einem abriebfesten Material aufweist und auf ihrer Unterseite eine farbgebende Schicht (FOND) aufweist. Wird ein derartiges Overlay unmittelbar beispielsweise auf eine mitteldichte Faserplatte verpreßt, so wird das als Trägerschicht fungierende Overlaypapier transparent und die farbgebende Schicht erscheint als Dekorschicht. Dadurch wirkt die Trägerschicht des Overlaypapiers nicht nur als Trägerschicht für die abriebfeste Beschichtung, beispielsweise mit Aluminiumoxid, sondern zugleich als dekortragende Schicht. Bei der Herstellung eines Laminates kann folglich auf das Aufbringen einer eigenen Dekorschicht verzichtet werden. Der Herstellungsprozeß für Laminate wird daher erheblich vereinfacht. Die Trägerschicht des Overlays stellt selbst einen Schutz für die farbgebende Schicht dar.

Wichtig ist bei dem erfindungsgemäßen Overlay, daß auf seiner Unterseite eine farbgebende Schicht aufgebracht, beispielsweise auflackiert, ist. Denn die beispielsweise mit Melaminharzen imprägnierte Trägerschicht des Overlays wird beim Verpressen auf den Laminatträger transparent. Ohne den rückseitigen Strich wäre dann lediglich der Laminatträger zu sehen. Folglich übernimmt der rückseitige Strich die Funktion des herkömmlichen Dekorpapieres.

Entscheidend ist weiterhin, daß die Trägerschicht nicht bereits vollständig mit dem abriebfesten Material durchsetzt ist sondern lediglich auf der Sichtseite mit dem abriebfesten Material versehen wird, damit die Unterseite und vor der abriebfesten Beschichtung auch die Oberseite der Trägerschicht noch mit den dekorgebenden Strukturen bedruckt oder lackiert werden kann. Anderenfalls würden die dafür nötigen Druckzylinder, etc. durch das abriebfeste Material zerstört werden. Eine vollständig mit abriebfestem Material durchsetzte Trägerschicht wäre nicht zum Auftrag der farb- und mustergebenden Schichten auf der Unterseite der Trägerschicht geeignet.

Für das erfindungsgemäße Verfahren sind alle herkömmlichen Overlaypapiere, am besten jedoch zusätzlich satinierte Overlaypapiere geeignet. Herkömmliche Overlaypapiere besitzen eine offene Struktur. Allerdings wird durch die Imprägnierung des Overlaypapiers die offene Struktur beseitigt.

Neben der farbgebenden Schicht können, wie auch in herkömmlicher Weise, weitere Druckschichten auf das Trägermaterial aufgebracht werden, die eine Musterung, beispielsweise eine holzmaserungsähnliche Musterung, erzeugen. Diese Druckschichten können vor oder nach der Imprägnierung der Trägerschicht auf die Trägerschicht aufgedruckt werden. Wesentlich ist jedoch, daß die farbgebende Schicht als unterste Schicht aufgebracht wird. Denn dadurch kommt in dem Laminat die farbgebende Schicht zu unterst zu liegen, so daß die Maserung, die durch die Druckschichten erzeugt wird, von der Sichtseite des Laminates aus zu erkennen und durch die farbgebende Schicht unterlegt ist.

Dies bedeutet erfindungsgemäß, daß der Aufbau der Unterseite der Trägerschicht des Overlays in umgekehrter Reihenfolge wie bei herkömmlichen Dekorpapieren, die auf herkömmlicher Weise auf ihrer Sichtseite bedruckt werden, d.h. jetzt im Konterdruck, erfolgt. Beim erfindungsgemäßen Verfahren wird folglich die Trägerschicht in der Reihenfolge: strukturgebender Aufdruck und anschließend ggf. weitere Farbschichten angeordnet. Abschließend wir die farbgebende Schicht (Fond) aufgebracht.

Alternativ oder zusätzlich kann vor oder nach dem Aufbringen der farbgebenden Schicht auf der Unterseite, jedoch vor dem Aufbringen der abriebfesten Beschichtung die Trägerschicht auf ihrer Oberseite in der herkömmlichen Reihenfolge von gegebenenfalls weiteren Farbschichten und anschließend strukturgebender Auftrag bedruckt werden.

Die farbgebende Schicht muß nicht aufgedruckt werden sondern kann auch auf die Unterseite der Trägerschicht auflackiert werden. Daher ist es auch möglich, die farbgebende Schicht erst nach der Ausrüstung des Overlays mit dem abriebfesten Material auf die Trägerschicht aufzulackieren.

Vorteilhaft an dem erfindungsgemäßen Overlay und den erfindungsgemäßen Belagelementen (Laminaten) ist weiterhin, daß, sofern ein Gegenzug trotz des nunmehr einfacheren Aufbaus des erfindungsgemäßen Laminats überhaupt benötigt wird, die Dimensionierung des Gegenzuges einfacher durchgeführt werden kann. Denn auf der Sichtseite des Laminates wird lediglich noch eine Schicht, das dekorgebende und abriebfeste Overlay, aufgebracht. Dementsprechend kann auch die Gegenzugschicht mit dünnerer Schichtdicke dimensioniert werden. Im folgenden werden einige Ausführungsformen der Erfindung beschrieben werden.

Es zeigen
Figur 1 die Herstellung eines erfindungsgemäßen Overlays;
Figur 2 den Aufbau eines herkömmlichen Dekorpapieres (Figur 2a) und den Aufbau eines erfindungsgemäßen Overlays (Figur 2b); und
Figur 3 den Aufbau eines herkömmlichen (Figur 3a) und eines erfindungsgemäßen Laminates (Figur 3b).

In einer Ausführungsform des erfindungsgemäßen Verfahrens zur Herstellung eines Overlays werden die folgenden Schritte durchgeführt:

### 1. Bedrucken des Overlays

Eine Trägerschicht aus einem Druckbasispapier aus deckenden mit TiO₂ gefüllten Papieren oder einem ungefüllten Overlaypapier wird im Konterdruck, beginnend mit der letzten Farbe (bezogen auf herkömmliche, sichtseitige normale Druckverfahren), dann mit der vorletzten Farbe, etc., bis hin zur zweiten Farbe bedruckt. Das Aufdrucken in dieser umgekehrten Reihenfolge kann beispielsweise durch Tiefdruck erfolgen. Dies bedeutet, daß zuerst der strukturgebende Aufdruck, dann helle Farbe, dunkle Farbe und erst abschließend der Fond, d.h. zuerst werden die einzelnen, das Muster ergebende Schichten ausschließlich der den Grundfarbton gebenden Schicht in umgekehrter Reihenfolge auf der Unterseite des Overlaypapiers aufgedruckt wird.

### 2. Imprägnieren des Overlays

Das bedruckte Overlay wird nun mit einem speziellen Melaminharz oder einer Mischung aus Melaminharz und Harnstoffharzen getränkt, wobei im Verhältnis zum Qverlaygewicht ca. 150 bis 250 % Harz aufgenommen werden. Dieses so imprägnierte Overlay wird anschließend ggf. getrocknet (siehe Punkt 3).

### 3. Aufbringen einer abriebfesten Schicht

Die abriebfeste Schicht kann auf verschiedene Arten aufgebracht werden. So können beispielsweise 1 bis 20 g/m² Edelkorund mit einer Korngröße von 1 bis 80 µm auf die Sichtseite des getränkten, noch nicht getrockneten Overlaypapiers aufgebracht werden. Andererseits ist es auch möglich, das getränkte, getrocknete Overlaypapier auf seiner Sichtseite mit einer zusätzlichen Melaminharzschicht zu überziehen, in die anschließend in gleicher Weise Edelkorund eingestreut wird. Es kann auch unmittelbar eine spezielle Mischung aus Melaminharz, ggf. α-Zellulose, und Edelkorund mit der oben angegebenen Korngröße auf das imprägnierte getrocknete oder noch nicht getrocknete Overlaypapier aufgebracht werden. Auch weitere Möglichkeiten, in diesem Schritt eine abriebfeste Schicht auf die Sichtseite des Overlays aufzubringen, sollen hiermit nicht ausgeschlossen werden.

Anschließend an die oben beschriebenen Verfahrensschritte wird das Overlaypapier getrocknet.

Als weitere Alternative zur Aufbringung der abriebfesten Schicht kann ein zusätzliches Overlaypapier mit einer Grammatur von 13 bis 45 g/m², das, wie oben angeführt, imprägniert und mit Edelkorund beschichtet wurde, auf das dekorgebende Overlay aufgebracht werden. Der entscheidende Vorteil, daß die Overlayschicht, die auf ihrer Unterseite das Dekor trägt, bereits einen Schutz für das Dekor darstellt, geht dabei nicht verloren.

### 4. Rückseitenbeschichtung

Im Anschluß an das Aufbringen der abriebfesten Schicht wird die Unterseite des Overlays mit der eigentlichen farbgebenden Schicht (FOND) versehen. Diese farbgebende deckende Rückseitenbeschichtung, bei der beispielsweise ein spezielles eingefärbtes Melaminharz aufgetragen, beispielsweise auflackiert wird, liefert die eigentliche Optik und übernimmt so die Funktion des üblichen Dekorpapiers. Das speziell eingefärbte Melaminharz kann gegebenenfalls gängige Additive wie Verlaufmittel, Entschäumer und dergleichen erhalten. Würde dieser Schritt entfallen, so wäre das Material vollkommen unbrauchbar, da das bedruckte Overlay beim Verpressen mit dem Laminatträger (Spanplatte, MDF, u.a.), wie oben beschrieben, transparent wird und dann nur noch die Optik des Laminatträgers zum Tragen kommen würde. Die in Schicht 1 aufgedruckten Musterungen wären ohne diesen rückseitigen Strich kaum bzw. gar nicht zu erkennen.

Nach dem erfindungsgemäßen Verfahren können der Schritt 3 (Aufbringen einer abriebfesten Schicht) und der Schritt 4 (Rückseitenbeschichtung) auch in umgekehrter Reihenfolge durchgeführt werden, ohne daß sich Nachteile ergeben.

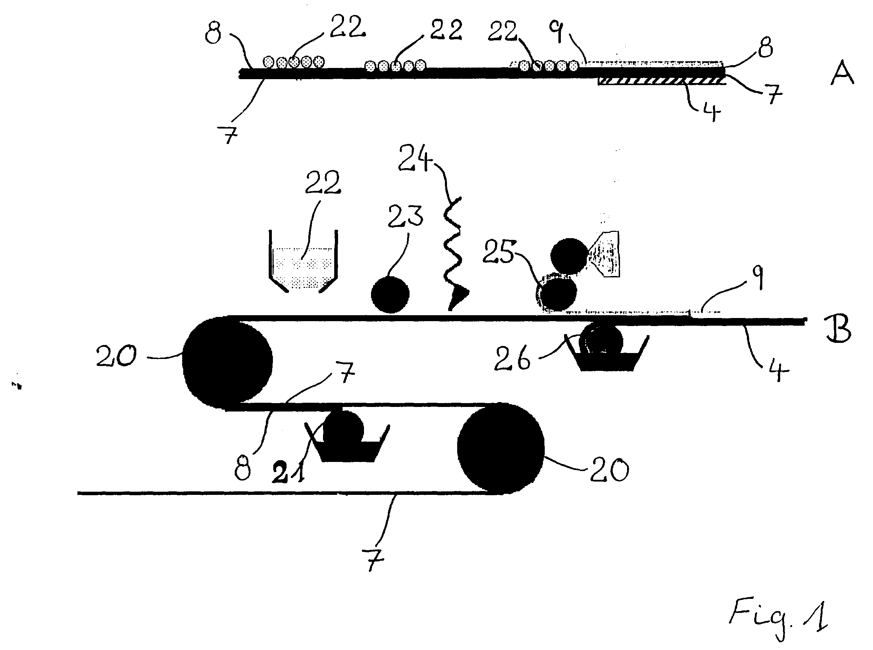

Figur 1B zeigt die Herstellung eines erfindungsgemäßen Overlays. Eine Overlayträgerschicht 7 aus Overlaypapier wird über Umlenkrollen 20 geführt. Nachdem die Overlayträgerschicht 7 über eine Umlenkrolle geführt wurde, wird sie mit ihrer Sichtseite an einem ersten Melaminharzrakel 21 vorbeigeführt. Dort wird die Trägerschicht 7 mit einer ersten Melaminharzschicht 8 imprägniert. Anschließend wird die Trägerschicht 7 nochmals durch eine Umlenkrolle 20 umgelenkt. Die Sichtseite der Trägerschicht 7, die noch mit der ersten feuchten Melaminharzschicht beschichtet ist, wird anschließend aus einem Behälter 22 mit Korundpartikeln (Al₂O₃) bestreut. Diese Korundpartikel dienen als abriebfestes Material und werden mit einer Verreiberwalze 23 in die Melaminharzschicht 8 eingerieben. Daraufhin wird die Melaminharzimprägnierung mittels Infrarotstrahlen 24 getrocknet. Im weiteren Verlauf wird dann auf der Sichtseite der Trägerschicht 7 mit einem zweiten Melaminharzrakel 25 eine zweite Melaminharzschicht 9 auf die Trägerschicht aufgebracht. Im Anschluß daran wird auf der Unterseite der Trägerschicht 7 mittels eines weiteren Rakels 26 die farbgebende Schicht 4 auf die Trägerschicht 7 aufgestrichen.

Das so mit Bezug auf Figur 1B beschriebene Verfahren zur Herstellung des erfindungsgemäßen Overlays wird in Figur 1A noch einmal erläutert. Dort ist der Aufbau des Overlays mit unmittelbarem Bezug auf die darunter dargestellte Herstellung gemäß Figur 1B beschrieben. Nach Umlenkung durch die in Figur 1B dargestellte zweite Umlenkrolle 20 besitzt die Trägerschicht 7 auf ihrer Oberseite (Sichtseite) eine erste Melaminharzschicht 8, auf die lose Korundpartikel 22 aufgestreut sind. Oberhalb der Verreiberwalze 23 in Figur 1B ist in Figur 1A dargestellt, wie die Korundpartikel 22 in die Melaminharzschicht 8 eingedrückt werden. Oberhalb des in Figur 1B dargestellten zweiten Melaminharzrakels 25 ist gezeigt, wie durch die zweite Melaminharzschicht 9, die gegebenenfalls auch α-Zellulose enthalten kann, die Korundpartikel 22 zur Glättung der Sichtseite des Overlays in die zweite Melaminharzschicht eingebettet werden und anschließend auf der Unterseite der Trägerschicht 7 die farbgebende Schicht 4 aufgebracht wird.

Um als Dekor nicht lediglich eine unifarbene Schicht 4 aufzubringen, kann vor der ersten Umlenkung durch die erste Umlenkrolle 20, d.h. vor dem Imprägnieren der Trägerschicht 7 mit der ersten Melaminharzschicht 8 auf der Unterseite der Trägerschicht 7 eine Musterung aufgedruckt werden. Diese ist dann bei dem fertigen Overlay gegen die farbgebende Schicht 4 von der Sichtseite des Overlays aus sichtbar, da die melaminharzgetränkte Overlay-Trägerschicht selbst beim Verpressen zur Herstellung eines Laminates vollständig durchsichtig wird.

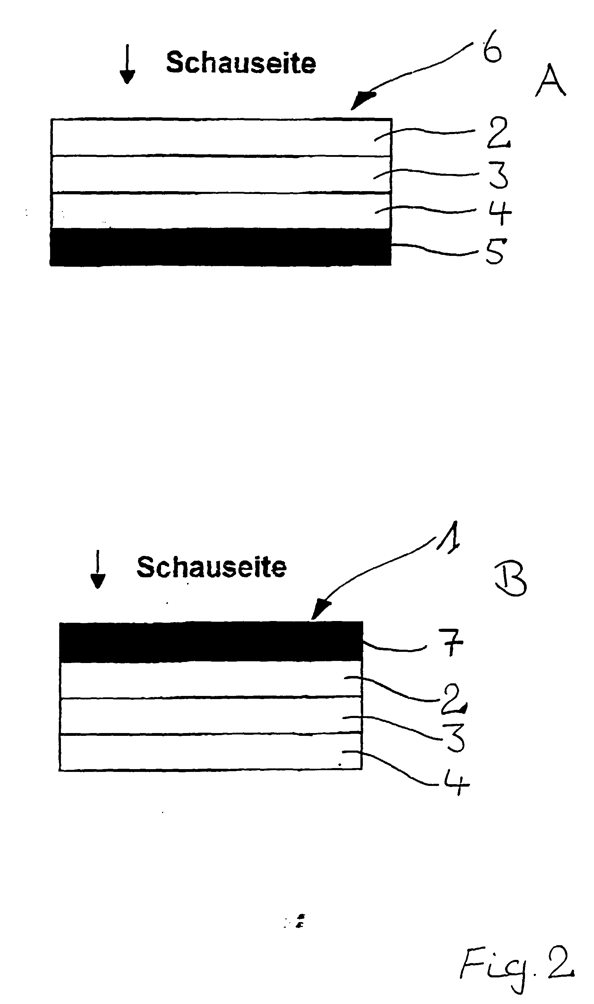

Figur 2A zeigt eine herkömmliche Dekorschicht für ein aus mindestens vier Einzelschichten aufgebautes Laminat. Die Dekorschicht weist eine Dekorträgerschicht 5 auf, auf deren Schauseite zuerst eine farbgebende Schicht 4 und anschließend Musterungen ergebende Strukturschichten 3 und 2 aufgetragen werden. Damit heben sich die von der Schauseite her betrachteten strukturgebenden Schichten 2 und 3 gegenüber der farbgebenden Schicht 4 ab und erzeugen das gewünschte Dekor.

Figur 2B zeigt den Aufbau eines erfindungsgemäßen Overlays. Eine Trägerschicht 7 aus Overlaypapier, die beispielsweise mit Melaminharz imprägniert ist, weist auf ihrer von der Schauseite abgewandten Unterseite eine Strukturschicht 2 und eine Strukturschicht 3 sowie eine farbgebende Schicht 4 auf, die auf die Trägerschicht 7 in umgekehrter Reihenfolge, wie in Figur 2A dargestellt, aufgebracht sind. Da die imprägnierte Trägerschicht 7 beim Verpressen mit dem Laminatträger, beispielsweise einer Sperrholzplatte, vollständig durchsichtig wird, haben sich auch in diesem Falle von der Schauseite her die Strukturschichten 2 und 3 gegenüber dem farbgebenden Untergrund 4 ab.

Figur 3A zeigt ein herkömmliches Laminat, bei dem auf einen Laminatträger 10 aus mitteldichter Faserplatte (MDF) oder Spanplatte oder dergleichen schauseitig zuerst ein Dekorpapier 6 und anschließend eine abriebfestigkeitsverleihende Overlayschicht 1 auflaminiert sind. Zum Ausgleich der durch die Schichten 6 und 1 entstandenen Spannungen wird auf der Rückseite ein Gegenzug 11 auflaminiert. Demgegenüber ist das erfindungsgemäße Laminat, das in Figur 3B dargestellt ist, erheblich einfacher aufgebaut. Auf einen Laminatträger 10 ist schauseitig lediglich das dekorgebende Overlay 1 auflaminiert, während auf der Rückseite des Trägers 10 ein entsprechender Gegenzug 11 angeordnet ist. Es ist unmittelbar zu erkennen, daß die Herstellung eines Laminates, beispielsweise für die Möbelindustrie oder als Fußboden oder Wandbelag, nach dem erfindungsgemäßen Verfahren erheblich einfacher und kostengünstiger herzustellen ist. Auch die Dimensionierung des Gegenzuges 11 ist einfacher durchzuführen.

## Patentansprüche

1. Widerstandsfähiges, mit einem Dekor versehenes Overlay (1) für ein Belagelement, wobei das Overlay (1) eine Trägerschicht (7) mit einer als Sichtseite dienenden Oberseite und einer im applizierten Zustand dem Belagelement zugewandten Unterseite aufweist, wobei die Trägerschicht (7) imprägniert ist und auf ihrer Oberseite eine Schicht, die ein abriebfestes Material, gegebenenfalls gemischt mit einem Bindemittel, enthält, und auf ihrer Unterseite eine farbgebende Schicht (4) aufweist, und wobei
die Unterseite zwischen dem Trägermaterial und der farbgebenden Schicht Druckschichten, die eine Musterung erzeugen, aufweist.

2. Overlay nach dem vorhergehenden Anspruch, dadurch gekennzeichnet, daß die Schicht auf der Oberseite der Trägerschicht das abriebfeste Material gemischt mit einem Bindemittel enthält.

3. Overlay nach einem der vorhergehenden Ansprüche, dadurch gekennzeichnet, daß die Druckschichten Schichten aus strukturgebendem Aufdruck oder strukturgebendem Aufdruck sowie weitere Farbschichten, und eine farbgebende Schicht aufweisen und ausgehend von der Trägerschicht in der Reihenfolge strukturgebender Aufdruck oder strukturgebender Aufdruck und weitere Farbschichten, und abschließend farbgebende Schicht angeordnet sind.

4. Overlay nach einem der vorhergehenden Ansprüche, dadurch gekennzeichnet, daß seine Oberseite zwischen der Trägerschicht und der abriebfesten Schicht Druckschichten, die eine Musterung erzeugen, aufweist.

5. Overlay nach dem vorhergehenden Anspruch, dadurch gekennzeichnet, daß die auf der OberSeite des Overlays angeordneten Druckschichten Schichten aus strukturgebendem Aufdruck und weitere Farbschichten aufweisen, die ausgehend von der Trägerschicht in der Reihenfolge weitere Farbschichten und anschließend strukturgebender Aufdruck angeordnet sind.

6. Overlay nach einem der Ansprüche 1 bis 5, dadurch gekennzeichnet, daß als Musterung eine Holzmaserung, beispielsweise im Tiefdruckverfahren, aufgedruckt ist.

7. Overlay nach einem der vorhergehenden Ansprüche, dadurch gekennzeichnet, daß die Trägerschicht ein Overlaypapier ist.

8. Overlay nach einem der vorhergehenden Ansprüche, dadurch gekennzeichnet, daß als Imprägnierungsmittel und/oder Bindemittel Melaminharz und/oder eine Mischung aus Melaminharz und Harnstoffharz und/oder die Mischung der vorstehenden Substanzen oder Mischungen mit α-Zellulose verwendet wird.

9. Overlay nach einem der vorhergehenden Ansprüche, dadurch gekennzeichnet, daß das abriebfeste Material Al₂O₃-haltige Partikel (Korund) enthält.

10. Overlay nach dem vorhergehenden Anspruch, dadurch gekennzeichnet, daß das abriebfeste Material Korund mit einer Korngröße zwischen 1 und 80 µm in einer Menge von 1 bis 20 g/m² enthält.

11. Overlay nach einem der vorhergehenden Ansprüche, dadurch gekennzeichnet, daß die farbgebende Schicht ein eingefärbtes Melaminharz oder eingefärbtes Melaminharz mit gängigen Additiven enthält.

12. Overlay nach einem der vorhergehenden Ansprüche, dadurch gekennzeichnet, daß die farbgebende Schicht auflackiert ist.

13. Verfahren zur Herstellung eines Overlays nach einem der vorhergehenden Ansprüche, dadurch gekennzeichnet, daß die Trägerschicht zuerst imprägniert und anschließend auf die Oberseite ein abriebfestes Material und auf die Unterseite eine farbgebende Schicht aufgetragen wird.

14. Verfahren nach dem vorhergehenden Anspruch, dadurch gekennzeichnet, daß das abriebfeste Material vor der farbgebenden Schicht aufgebracht wird.

15. Verfahren nach dem vorhergehenden Anspruch, dadurch gekennzeichnet, daß anschließend an den Auftrag der farbgebenden Schicht weiteres abriebfestes Material auf die Oberseite aufgetragen wird.

16. Verfahren nach Anspruch 13, dadurch gekennzeichnet, daß die farbgebende Schicht vor dem abriebfesten Material aufgebracht wird.

17. Verfahren nach einem der Ansprüche 13 bis 16, dadurch gekennzeichnet, daß zum Auftrag des abriebfesten Materials das abriebfeste Material auf die noch feuchte Imprägnierung aufgestreut oder anderweitig aufgebracht wird, oder die Imprägnierung getrocknet, eine weitere Schicht aus Bindemittel aufgetragen und das abriebfeste Material auf diese noch feuchte Bindemittelschicht aufgebracht wird, oder das abriebfeste Material mit Bindemittel oder mit Bindemittel und α-Zellulose gemischt und auf die auf der Trägerschicht befindliche noch feuchte oder bereits getrocknete Imprägnierschicht aufgebracht wird.

18. Verfahren nach dem vorhergehenden Anspruch, dadurch gekennzeichnet, daß das Overlay anschließend getrocknet wird.

19. Verfahren nach einem der Ansprüche 13 bis 18, dadurch gekennzeichnet, daß bei Auftrag der Imprägnierung die Trägerschicht mit dem Imprägnierungsmittel getränkt wird.

20. Verfahren nach einem der Ansprüche 13 bis 19, dadurch gekennzeichnet, daß die Trägerschicht vor oder nach der Imprägnierung auf der Unterseite oder Oberseite mit einem Muster aus strukturgebendem Aufdruck oder einem Muster aus strukturgebendem Aufdruck sowie weiteren Farbschichten bedruckt wird.

21. Verfahren nach dem vorhergehenden Anspruch, dadurch gekennzeichnet, daß die Trägerschicht mit einem farbigen Muster als strukturgebendem Aufdruck bedruckt wird.

22. Verfahren nach einem der beiden vorhergehenden Ansprüche, dadurch gekennzeichnet, daß das Muster auf der Unterseite in folgender Schichtfolge: strukturgebender Aufdruck oder strukturgebender Aufdruck und weitere Farbschichten, und abschließend die farbgebende Schicht bzw. auf der Oberseite in der Schichtfolge: farbgebende Schicht, anschließend strukturgebender Aufdruck oder weitere Farbschichten sowie strukturgebender Aufdruck aufgetragen wird.

23. Verfahren nach einem der drei vorhergehenden Ansprüche, dadurch gekennzeichnet, daß das Muster im Tiefdruckverfahren aufgedruckt wird.

24. Verfahren nach einem der Ansprüche 13 bis 23, durch gekennzeichnet, daß als Trägerschicht ein Overlaypapier verwendet wird.

25. Verfahren nach einem der Ansprüche 13 bis 24, dadurch gekennzeichnet, daß die farbgebende Schicht auflackiert wird.

26. Verfahren zur Herstellung eines mehrschichtigen Belagelements (Laminat) mit einem Laminatträger, dadurch gekennzeichnet, daß ein Overlay gemäß einem der Ansprüche 1 bis 12 mit seiner Unterseite auf den Laminatträger gelegt und mit diesem verpreßt wird.

27. Verfahren nach dem vorhergehenden Anspruch, dadurch gekennzeichnet, daß auf der dem Overlay gegenüberliegenden Seite des Laminatträgers eine Gegenzugschicht aufgebracht wird.

28. Verfahren nach einem der beiden vorhergehenden Anspruch, dadurch gekennzeichnet, daß ein weiteres Overlay aus mit Bindemittel getränktem oder mit Bindemittel getränktem und mit abriebfestem Material versehenem Trägermaterial auf die Oberfläche des bereits mit dem Laminatträger verbundenen Overlays auf gelegt und mit diesem verpreßt wird.

29. Verfahren nach einem der beiden vorhergehenden Ansprüche, dadurch gekennzeichnet, daß als Laminatträger eine Spanplatte oder eine mitteldichte Faserplatte verwendet wird.

30. Verwendung eines Belagelements, hergestellt nach einem der drei vorhergehenden Ansprüche für Gebäudeoberflächen, insbesondere Fußbodenbeläge.
